# EUROPEAN PATENT SPECIFICATION

(11) **EP 1 742 181 B1**
(45) Date of publication and mention of the grant of the patent: **08.06.2011**
(21) Application number: 06253522.4
(22) Date of filing: 05.07.2006
(51) Int. Cl.: G06T 19/00

(54) **Selection of a part in image showing three dimensional object**
Auswahl eines Bildteils mit dreidimensionalem Objekt
Sélection d'une partie de l'image montrant un objet tridimensionnel

(30) Priority: 07.07.2005 JP 2005198855; 15.06.2006 JP 2006166273
(43) Date of publication of application: 10.01.2007
(73) Proprietor: Ricoh Company, Ltd., Tokyo 143-8555 (JP)
(72) Inventor: Satoh, Naoyuki, Yokohama-shi, Kanagawa (JP); Kagawa, Masaaki, Tokyo (JP); Yamagata, Junichi, Koshigaya-shi, Saitama (JP)
(74) Representative: Leeming, John Gerard

(56) References cited:
- US-B1- 6 226 001
- US-B1- 6 370 267
- EITELJORG H ET AL: "CSA - AutoCAD Tutorial" INTERNET CITATION, [Online] 9 February 2002 (2002-02-09), XP002366473 Retrieved from the Internet: URL:http://web.archive.org/web/20020209102 003/www.csanet.org/inftech/tutorial.html> [retrieved on 2006-02-07]
- DAVID S. COHN: "AutoCAD 2000: The Complete Reference" 2000, OSBORNE/MCGRAW-HILL , XP002484071 * page 224 - page 231 * * page 401 - page 410 *

## Description

The present invention generally relates to CAD (computer-aided design) systems and CG (computer graphics) systems, and particularly relates to a method of selecting one of the components constituting an object of interest in a CAD system or CG system.

In recent years, the use of various image contents has been becoming widespread owing to improvements in the performance of computers and development in multimedia technology. In the manufacturing industry that manufactures industrial products, the use of image contents such as parts catalogs or service manuals as electronic media has been becoming possible, with images showing the company's product models.

Many industrial products such as mechanical products or electrical products are comprised of a plurality of parts. When an image of a product model is used, some of the parts that constitute the product may often be required to be identified in the image. In such a case, an image showing an exploded view in which the product model is disassembled into individual parts is generated, and character-based identifies such as serial numbers are shown alongside the individual parts in the image, thereby allowing the parts to be identified in the image.

In such a method, however, what is shown as an image is an exploded view in which the product is disassembled into individual parts, so that there is a problem in that it is difficult to create a mental image of the assembled product. Further, when an actual product is provided to work on, it is difficult to identify an actual part mounted to a particular portion by identifying a corresponding part in the image showing an exploded view of the product.

In consideration of these problems, the technology disclosed in Patent Document 1 provides a method of extracting some parts of a product model situated within a closed space that is specified as having a height, width, and depth in three-dimensional space in a CAD system, in which data of a three-dimensional product model is processed.

[Patent Document 1] Japanese Patent Application Publication No. 09-190456

With respect to the technology of Patent Document 1, however, application is limited to a CAD system, and the identification of parts in a two-dimensional image in general is not achieved. Namely, this technology is designed to extract three dimensional data by specifying a closed space in a three-dimensional space, and, thus, has a problem in that the amount of computation associated with data processing is huge. Further, there is a need for the user to be always conscious of a spatial expanse having a height, width, and depth when specifying a closed space, which results in an unsatisfactory operability and inconvenience of use.

Accordingly, there is a need for a parts selecting apparatus, a parts selecting method, and a record medium having a parts selecting program, which can be executed even on a low-performance computer satisfactorily in practical use, and which allow a selected part to be visualized as a part mounted on the product.

The article "CSA-AutoCAD Tutorial" (XP-002366473) describes a number of functions of "AutoCAD" software including functions that select objects in a drawing and change the magnification of the view of the drawing.

US 6,226,001 discloses a system for displaying a virtual 3D workspace containing virtual 3D objects, each object having a plurality of face views associated with it which may be selected.

US 6,370,267 discloses a method and an apparatus for displaying photo-realistic 3-dimensionally projected views of real objects in real scenes and enabling the viewer to manipulate these objects as though they were physically manipulated.

It is a general object of the present invention to provide a parts selecting apparatus, a parts selecting method, and a record medium having a parts selecting program that substantially obviate one or more problems caused by the limitations and disadvantages of the related art.

Features and advantages of the present invention will be presented in the description which follows, and in part will become apparent from the description and the accompanying drawings, or may be learned by practice of the invention according to the teachings provided in the description. Objects as well as other features and advantages of the present invention will be realized and attained by a parts selecting apparatus, a parts selecting method, and a record medium having a parts selecting program particularly pointed out in the specification in such full, clear, concise, and exact terms as to enable a person having ordinary skill in the art to practice the invention.

To achieve these and other advantages in accordance with the purpose of the invention, the invention provides a parts selecting apparatus and a method of selecting a part as defined in the appended claims.

According to at least one embodiment of the present invention, a part that is mounted to a particular portion of a product can be visually identified while creating a mental image of the assembled product in which parts are entangled to form a shape model such as an industrial product.

Moreover, two-dimensional data of product images are processed and used for display when identifying parts, so that the parts can be identified with a relatively light computation load compared with the case in which three-dimensional model shape data are used. This allows even a low performance computer to suffice in practice.

Other objects and further features of the present invention will be apparent from the following detailed description when read in conjunction with the accompanying drawings, in which:
Fig. 1 is a block diagram showing a schematic configuration of a parts catalog viewing system utilizing a parts selecting apparatus of the present invention;
Figs. 2A through 2D are drawings showing the display screens of the parts catalog viewing system displaying a three-dimensional shape model;
Fig. 3 is a block diagram showing the configuration of the parts selecting apparatus according to an embodiment;
Fig. 4 is a flowchart for explaining the operation procedure of an inclusion/non-inclusion determining unit;
Fig. 5 is a flowchart showing the operation procedure of the parts selecting apparatus according to the embodiment;
Fig. 6 is a drawing illustrating the configuration of a parts management information set;
Fig. 7 is a drawing showing a hierarchical structure of a parts management information unit;
Figs. 8A and 8B are drawings showing the data structures of header information and body information, respectively;
Figs. 9A and 9B are drawings showing an example of the parts management information unit that is a unit of a parent (i.e., an upper layer);
Figs. 10A and 10B are drawings showing an example of the parts management information unit that is a unit of a child (i.e., a lower layer);
Figs. 11A through 11L are views showing examples of images having file names specified in the parts management information unit; and
Fig. 12 is a drawing showing an example of the graphical user interface of the parts selecting apparatus according to the present invention.

### DESCRIPTION OF THE PREFERRED EMBODIMENTS

In the following, preferred embodiments of the present invention will be described with reference to the accompanying drawings.

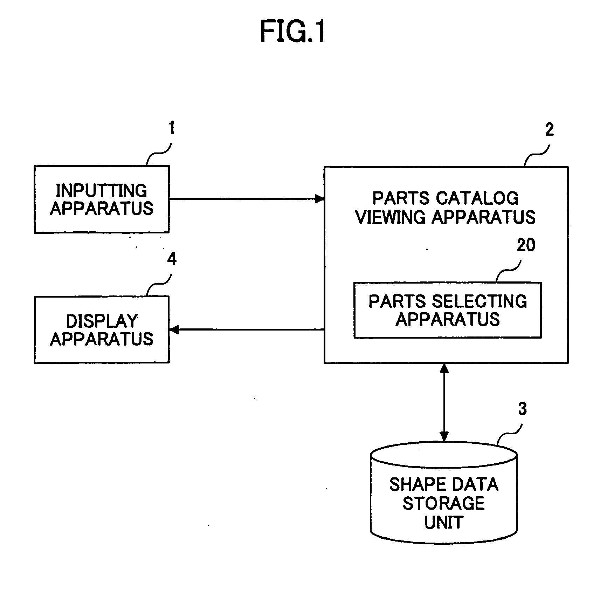

Fig. 1 is a diagram showing a schematic configuration of a parts catalog viewing system utilizing a parts selecting apparatus of the present invention. In Fig. 1, the parts catalog viewing system includes an inputting apparatus 1 inclusive of at least a mouse and keyboard for entering instruction and information, a parts catalog viewing apparatus 2 inclusive of a parts selecting apparatus 20 of the present invention, a shape data storage unit 3, and a display apparatus 4 for displaying a shape model, an image of the shape model, entered data, processed and yet-to-be-processed data, etc.

The shape data storage unit 3 has, stored therein in advance, two-dimensional and/or three dimensional shape model data, and entire images and parts images taken from different view angles at different magnifications. With respect to the parts, an image showing an individual part alone and the name of the part are stored as information for identifying each part.

As will be described in the following, the present invention allows the user to select one or more parts included in a partial area specified by the user in the entire image, to select one part from such selected parts, and to switch view angles of an image showing the selected part. In order to reduce the amount of computation associated with such image data processing, it is preferable to use two-dimensional data, rather than to use three-dimensional data to check the inclusion/non-inclusion of data and to generate two-dimensional images taken from different view angles. Namely, the process of identifying one or more parts included in a partial area specified by the user and the process of switching the view angles of images may better be performed by using two-dimensional data rather than using three dimensional data, while it is possible to perform these processes by use of three-dimensional data.

When two-dimensional data is used, the shape data storage unit 3 has, stored therein in advance, images of shape models taken from various different view angles, images in each of which a specific part is highlighted, boundary information specifying the boundaries of image areas occupied by respective individual parts in each image, images of parts viewed from different view angles at different magnifications, etc. Alternatively, data that can be readily generated through relatively simple processing (e.g., images at specified magnifications) may be generated upon request for display, rather than being prepared and stored in advance. In such a pats catalog viewing system, the user uses the inputting apparatus 1 to select a desired shape model stored in the shape data storage unit 3, and displays the product or set of parts corresponding to the selected shape model through the display apparatus 4, followed by selecting a desired part, and then maybe selecting a part from the parts into which the selected part is further disassembled. In so doing, the parts selecting apparatus 20 of the present invention is used for the purpose of selecting a part. In the following disclosure, the term "shape model" is used to refer to an entirety of a product or a unit that is part of the product.

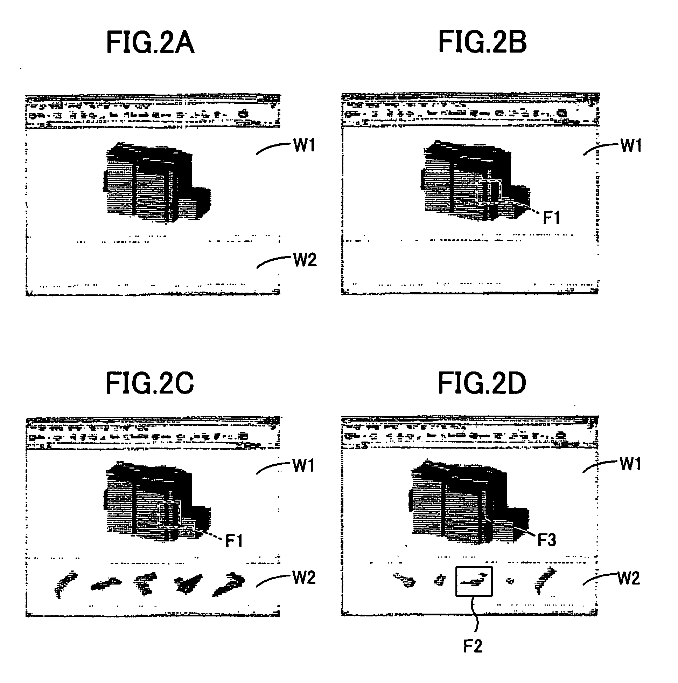

Figs. 2A through 2D are drawings showing the display screens of the parts catalog viewing system displaying a three-dimensional shape model.

Fig. 2A shows an entirety of a three-dimensional product model. The system is provided with an area (upper window W1) for displaying an entire image of a three-dimensional shape model and an area (lower window W2) for displaying images showing respective parts individually. Namely, there are two windows for displaying two types of images.

Fig. 2B shows the way a partial area (F1) of the image showing the entirety of the three-dimensional shape model is specified.

Fig. 2C shows the way the individual images of respective parts included in the area (F1) shown in Fig. 2B are displayed in the window W2.

Fig. 2D shows the way one (F2) of the individual part images shown in the window W2 is selected, with a portion (F3) corresponding to the selected part (F2) being highlighted in the entire image of the three-dimensional shape model displayed in the window W1.

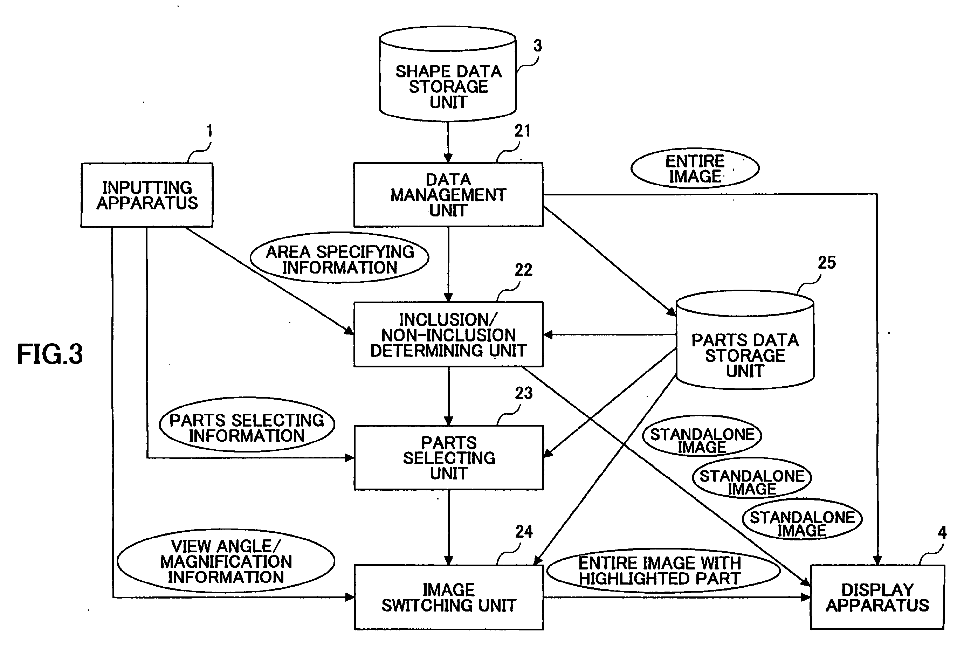

Fig. 3 is a block diagram showing the configuration of the parts selecting apparatus according to the present embodiment. In Fig. 3, the parts selecting apparatus 20 includes a data management unit 21, an inclusion/non-inclusion determining unit 22, a parts selecting unit 23, an image switching unit 24, and a parts data storage unit 25.

Each of the units listed above is implemented as a program providing a corresponding function of the parts selecting apparatus 20, with the program being executed by use of hardware inclusive of a CPU, a memory, a keyboard, a mouse, a display, etc. The memory unit is implemented as a memory device or an external storage apparatus.

The parts data storage unit 25 stores three types of data as follows, with respect to an entirety of each two-dimensional or three-dimensional model and with respect to each of the parts constituting each model.

Entire Image with Highlighted Part: an image of an entirety of a two-dimensional or three-dimensional model, with a part of interest being highlighted. Here, the highlighting of a part of interest is achieved by displaying the part of interest with a display appearance different from that of other parts, e.g., in a particular color (red or the like), or with a flashing appearance.

Standalone image: an image showing a part of interest alone, and information such as the name of the part necessary to identify the part.

Boundary Information: information regarding the boundaries between the area occupied by a part of interest and the surrounding areas in an image of an entirety of a two-dimensional or three-dimensional model, such information including geometric shape data such as points, curves, curved surfaces, and phase data indicative of the relationships between the geometric shape data.

It should be noted that the entire image with a highlighted part and the boundary information described above are stored as such images and information for different view angles and different magnifications with respect to each part.

The three types of data described above are retrieved from the shape data storage unit 3 for storage in the parts data storage unit 25.

The data management unit 21 uses the inputting apparatus 1 to let the user specify, from the shape models displayed on the display apparatus 4, a shape model that the user wishes to view as a parts catalog, and refers to the shape data storage unit 3 to retrieve an entire image of the specified shape model, entire images with a highlighted part with respect to each of the parts constituting this model, a standalone image of each of the parts, and the boundary information of each of the parts. These images and information are retrieved for each of the different view angles for each of the different magnifications for storage in the parts data storage unit 25, and the entire image of the specified shape model is displayed on the display apparatus 4 (i.e., the window W1 of Fig. 2A).

The inclusion/non-inclusion determining unit 22 prompts the user to enter area information indicative of a partial area of the entire image in order to narrow down candidate parts for selection in the entire image of the shape model displayed on the display apparatus 4. To be specific, with the entire image of the shape model as viewed from a given view angle being displayed on the screen of the display apparatus 4, the position of the pointer shown on this screen is manipulated by use of a mouse, cursor keys, or the like to specify two points on the image, thereby specifying a closed rectangular area having these two points as diagonally opposite corners. In this case, the information indicative of this closed rectangular area serves as the area information.

The inclusion/non-inclusion determining unit 22 receives the area information (F1 shown in Fig. 2B) entered through the inputting apparatus 1, and compares the received area information with the boundary information of each one of the parts stored in the parts data storage unit 25, thereby to check whether these parts are selected. If a given part is selected, the inclusion/non-inclusion determining unit 22 retrieves the information identifying entire images with a highlighted part for different view angles for different magnifications with respect to the given part for provision to the parts selecting unit 23, and displays the standalone image or name of this part on the display apparatus 4 (i.e., the window W2 as shown in Fig. 2C).

In so doing, if there are two or more standalone images to be displayed, these standalone images may be displayed so that one of them can be selected.

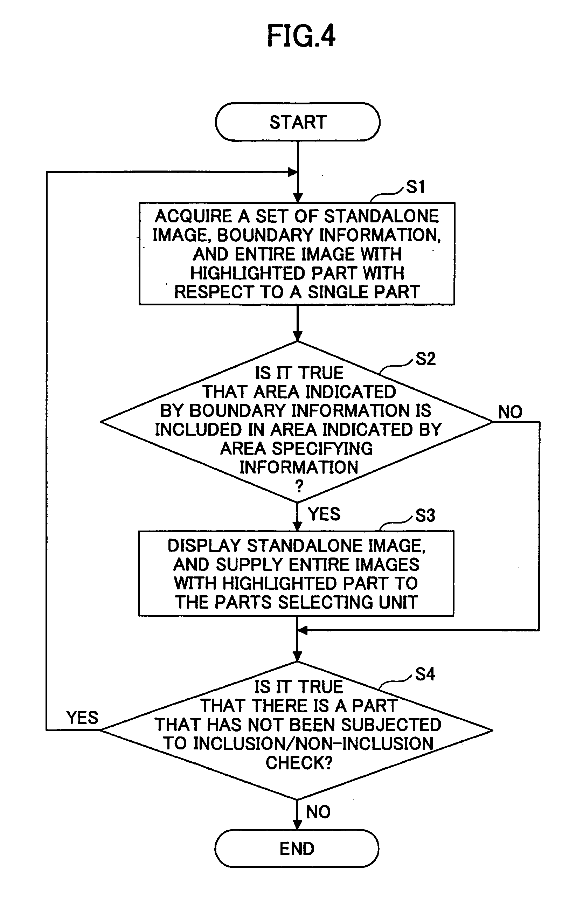

An operation procedure of the inclusion/non-inclusion determining unit 22 will be described in detail by referring to the flowchart of Fig. 4.

A set of a standalone image, boundary information, and an entire image with a highlighted part is acquired with respect to a part stored in the parts data storage unit 25 (step S1).

A check is made as to whether the area indicated by the boundary information is included in the area indicated by the area information (step S2). If the area is not included (NO at step S2), the procedure goes to step S4.

If the area is included (YES at step S2), the standalone image is displayed on the display apparatus 4, and the entire images with the highlighted part are supplied to the parts selecting unit 23 (step S3). These entire images with the highlighted part are to be subsequently displayed upon the selection of this part by the user, and are thus supplied to the parts selecting unit 23 as preparation.

If there is a part that has not been subjected to the inclusion/non-inclusion check (YES at step S4), the procedure returns to step S1. If the inclusion/non-inclusion check is finished with respect to all the parts (NO at step S4), the procedure comes to an end.

The parts selecting unit 23 prompts the user to select one (e.g., F2 as shown in Fig. 2D) of the specified parts by use of the inputting apparatus 1 among the standalone images displayed on the display apparatus 4, and retrieves, from the parts data storage unit 25, the information identifying entire images with a highlighted part for different view angles for different magnifications with respect to the selected part for provision to the image switching unit 24.

The image switching unit 24 receives information indicative of a view angle and/or a magnification from the inputting apparatus 1 (if none is specified, a default view angle and magnification may be used), and refers to the parts data storage unit 25 to retrieve the entire image with the highlighted part taken from the specified view angle at the specified magnitude supplied from the parts selecting unit 23, followed by displaying the image on the display apparatus 4 (e.g., F3 as shown in Fig. 2D). The view angle and/or magnification of the displayed image can be changed upon a view-angle switch request or enlargement/reduction request from the user operating the inputting apparatus 1.

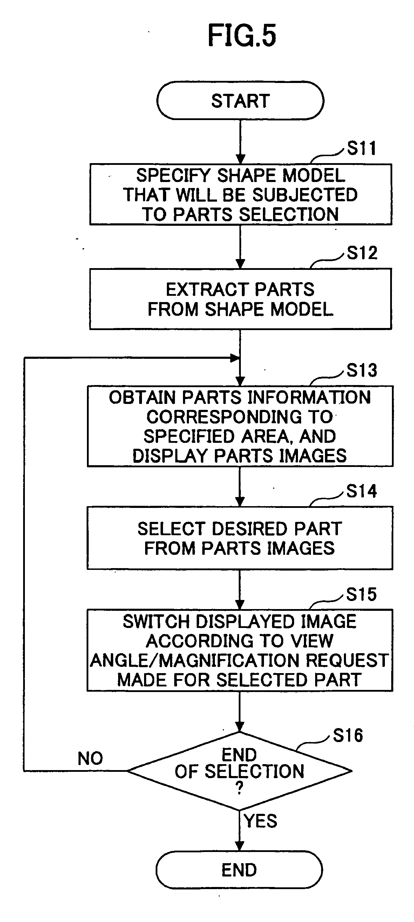

A operation procedure of the parts selecting apparatus according to this embodiment will be described by referring to the flowchart of Fig. 5.

The parts selecting apparatus uses the inputting apparatus 1 to let the user specify, from the shape models displayed on the display apparatus 4, a shape model that the user wishes to view as a parts catalog (step S11), and refers to the shape data storage unit 3 to retrieve an entire image of the specified shape model, entire images with a highlighted part with respect to each of the parts constituting this model, a standalone image of each of the parts, and the boundary information of each of the parts. These images and information are retrieved for each of the different view angles for each of the different magnifications for storage in the parts data storage unit 25, and the entire image of the specified shape model is displayed on the display apparatus 4 (step S12).

In order to narrow down candidate parts for selection in the entire image of the shape model displayed on the display apparatus 4, the parts selecting apparatus prompts the user to specify area information indicative of a partial area of the entire image (e.g., F1 as shown in Fig. 2B), and compares the area information with the boundary information of each one of the parts stored in the parts data storage unit 25. If a given part is selected, the parts selecting apparatus retrieves the information identifying entire images with a highlighted part for different view angles for different magnifications with respect to the given part, and displays the standalone image or name of this part on the display apparatus 4 (i.e., the window W2 as shown in Fig. 2C) (step S13).

The parts selecting apparatus prompts the user to select a desired one (e.g., F2 as shown in Fig. 2D) of the specified parts among the standalone images or names displayed on the display apparatus 4, and retrieves, from the parts data storage unit 25, the information identifying entire images with a highlighted part for different view angles for different magnifications with respect to the selected part (step S14).

The parts selecting apparatus then refers to the parts data storage unit 25 to retrieve the entire image with the highlighted part as taken from the user specified view angle (or default view angle) at the user specified magnification (or default magnification) among the entire images with the highlighted selected part, and displays the retrieved image on the display apparatus 4 (e.g., F3 as shown in Fig. 2D), followed by switching the image in response to a view angle/magnification switching request made by the user (step S15).

Thereafter, if the selection of parts is to be further made (NO at step S16), the procedure returns to step S13 to repeat the steps up to step S16.

According to the present embodiment described above, the entire image of a shape model that shows the selected part is displayed, thereby making it possible for the user to identify the selected part in the entire image of the shape model.

Further, the entire image with the selected part being highlighted is displayed as taken from a desired one of the different view angles at a desired one of the different magnifications, thereby making it possible for the user to identify the selected part in the entire image of the shape model.

Moreover, the images of the products and parts are handled as two dimensional data when identifying parts, so that the parts can be identified with a relatively light computation load compared with the case in which three-dimensional model shape data are used. This allows even a low performance computer to suffice in practice.

In the following, embodiments relating to the data structure of a pats catalog and a data management method according to the present invention will be described.

In this embodiment, a plurality of parts management information items are assembled into a single data set for management purposes. One parts management information item is referred to as a parts management information unit, and one data set comprised of a plurality of parts management information units is referred to as a parts management information set. Such parts management information is stored in the shape data storage unit 3 and/or the parts data storage unit 25.

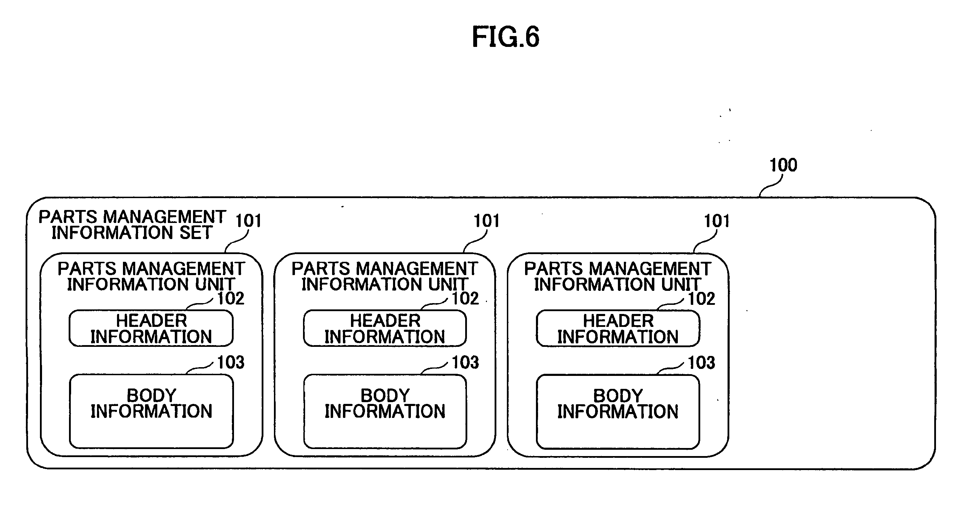

Fig. 6 is a drawing illustrating the configuration of a parts management information set. A parts management information set 100 shown in Fig. 6 includes one or more parts management information units 101. Each parts management information unit 101 includes header information 102 and body information 103.

The two or more parts management information units 101 included in the single parts management information set 100 are related to each other so as to form a hierarchy having a plurality of layers. The relations between the parts management information units 101 are defined by including, in the body information 103 of an upper-layer parts management information unit 101 (i.e., a parent), a reference to a lower-layer parts management information unit 101 (i.e., a child). The number of layers in the hierarchy can be any number.

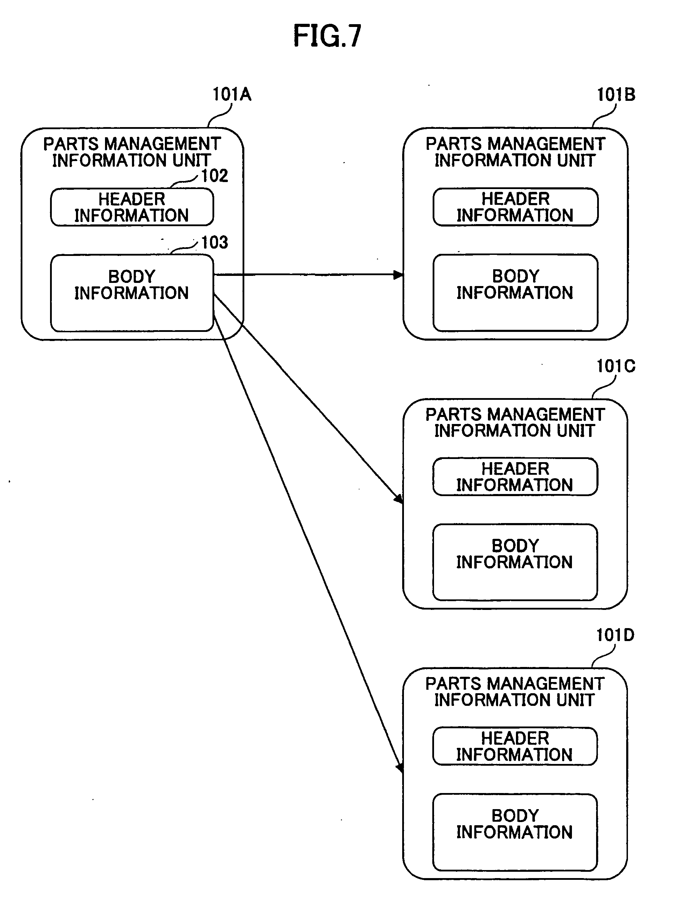

Fig. 7 is a drawing showing a hierarchical structure of the parts management information unit 101. In an example shown in Fig. 7, a parts management information unit 101A is that of an upper order (i.e., parent), to which parts management information units 101B through 101D are related as lower-order units (i.e., child units). Such parent-child relations are described in the body information 103 of the parts management information unit 101A.

The parts management information unit 101A serving as a parent corresponds to a product as a whole, for example, and the parts management information units 101B through 101D correspond to respective units that constitute this product (e.g., units having respective functions, units each assembled as an integral structure and separable from each other, or the like). Each unit is comprised of one or more parts. If one product is comprised of one unit, a single parts management information set 100 includes only one parts management information unit 101 (i.e., the parts management information unit 101 exists alone without having any links to other units).

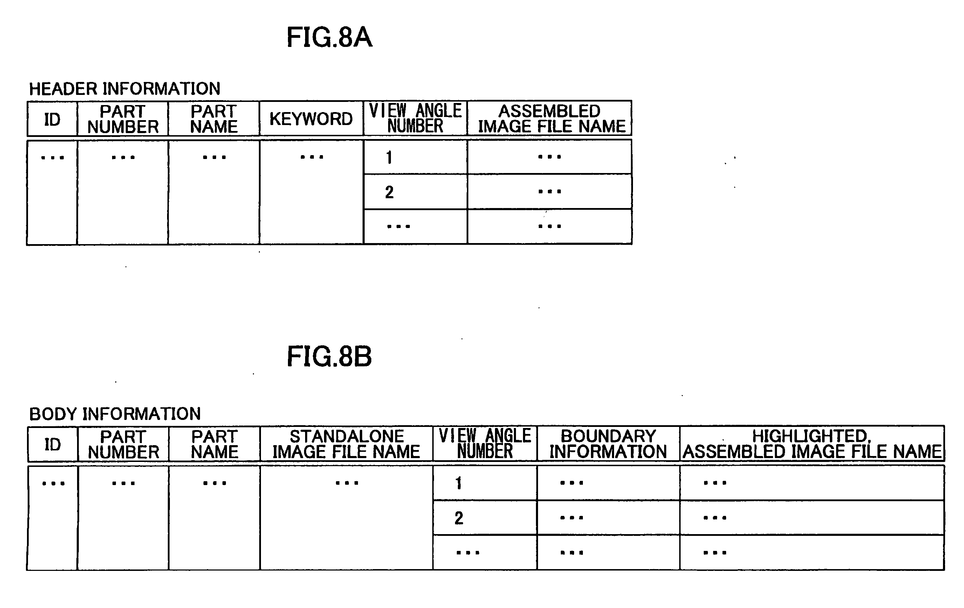

Figs. 8A and 8B are drawings showing the data structures of the header information and body information, respectively. As shown in Fig. 8A, the header information 102 includes an ID, a part number, a part name, one or more keywords, a view angle number, and an assembled image file name. As shown in Fig. 8B, the body information 103 includes an ID, a part number, a part name, a standalone image file name, a view angle number, boundary information, and a highlighted, assembled image file name.

The header information 102 serves to describe an object (i.e., a product as a whole or a unit as a part thereof) pointed to by the parts management information unit 101. The ID is an identification number for uniquely identifying the object. The part number is used for the purpose of managing the object as a part. The part name is the name of the object. The one or more keywords are words relating to the parts included in the object. The view angle number serves to identify a view angle of an image of the object. The assembled image file name is the file name of an image of the object as viewed from a corresponding view angle. Only one ID, only one part number, and only one part name are given with respect to the object. Each of the view angle number and the assembled image file name is provided as many as there are different view angles.

The body information 103 serves to describe constituent elements (i.e., parts or units) included in the object pointed to by the parts management information unit 101. Only one ID, only one part number, only one part name, and only one standalone image file name are given with respect to each constituent element. Each of the view angle number, the boundary information, and the highlighted, assembled image file name is provided as many as there are different view angles with respect to each constituent element. The ID is an identification number for uniquely identifying the constituent element. The part number is used for the purpose of managing the constituent element as a part. The part name is the name of the constituent element. The standalone image file name is the name of an image showing the constituent element alone. The view angle number serves to identify a view angle of an image of the object (as indicated by the header information 102) with the constituent element being highlighted. The boundary information serves to identify the area occupied by the constituent element in an image of the object (as indicated by the header information 102) taken from a corresponding one of the different view angles. The highlighted, assembled image file name is the file name of an image of the object (as indicated by the header information 102) with the constituent element being highlighted as viewed from a corresponding one of the view angles.

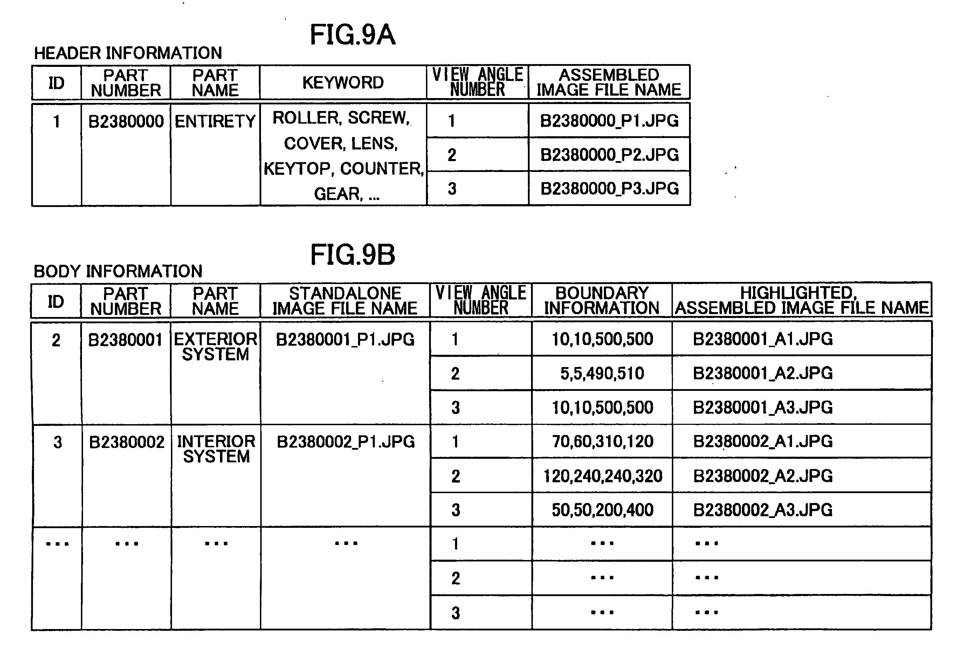

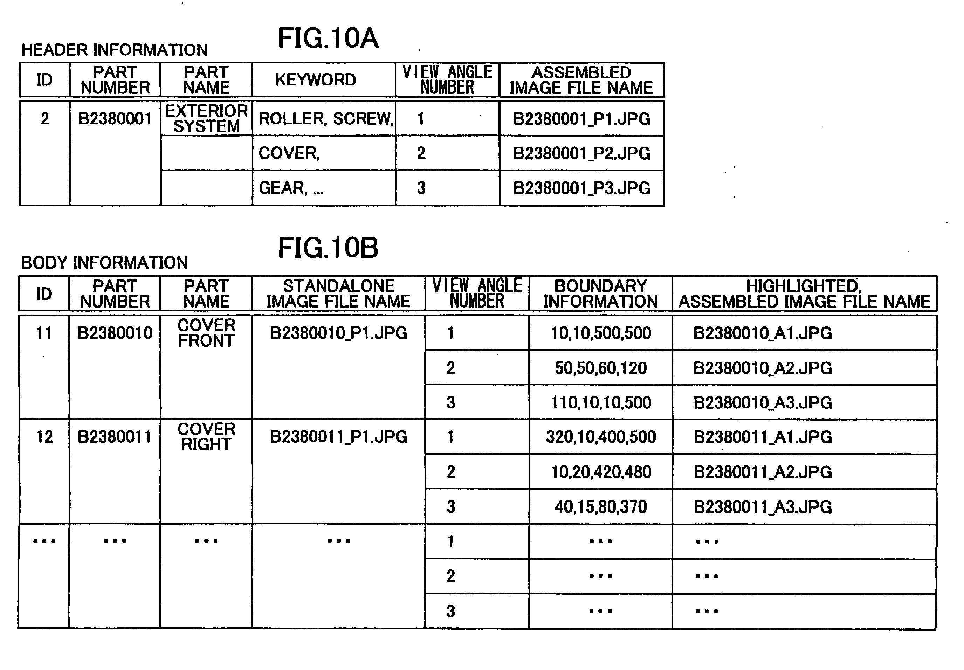

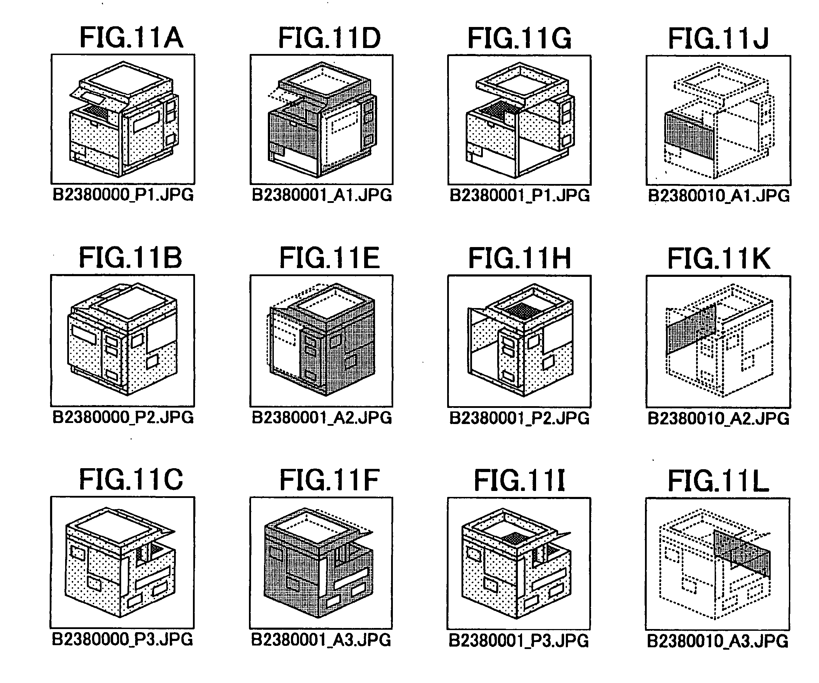

Figs. 9A and 9B are drawings showing an example of the parts management information unit 101A that is a unit of an upper layer (i.e., parent). Fig. 9A shows the header information 102, and Fig. 9B shows the body information 103. Figs. 10A and 10B are drawings showing an example of the parts management information unit 101B that is a unit of a lower layer (i.e., child). Fig. 10A shows the header information 102, and Fig. 10B shows the body information 103. Figs. 11A through 11L are views showing examples of images having the file names specified in the parts management information unit.

The parts management information unit 101A in this example corresponds to a product as a whole that is a copier machine. As shown in the header information of Fig. 9A, the part name is "entirety", and three image file names are specified in one-to-one correspondence to the three respective view angles. Images of these three image files are shown in Figs. 11A through 11C. The entire images of a copier machine viewed from three different view angles as shown in Figs. 11A through 11C are prepared in advance as image data. In response to a user request, one of these images is displayed.

The body information of Fig. 9B includes information about each unit of the copier machine. In this example, each portion of the copier machine is treated as a unit having a corresponding function. Examples of such units include an exterior system (housing) relevant to the exterior of the copier machine, an operation system (operation panel) relevant to the user operation of the copier machine, a drive system (motors, rollers, belts, etc.), and the like. The body information of Fig. 9B specifies entire images of the copier machine with the exterior system unit of the part number "B2380001" being highlighted as three file names B2380001_A1, B2380001_A2, and B2380001_A3 corresponding to the three respective view angles, for example. Images of these three image files are shown in Figs. 11D through 11F. The entire images of the copier machine with the exterior system unit being highlighted viewed from three different view angles as shown in Figs. 11D through 11F are prepared in advance as image data. In response to a user request, one of these images is displayed.

The header information shown in Fig. 10A is the header information of the parts management information unit of the exterior system unit. Three image file names are specified in one-to-one correspondence to the three respective view angles. Images of these three image files are shown in Figs. 11G through 11I. The images of the exterior system unit viewed from three different view angles as shown in Figs. 11G through 11I are prepared in advance as image data. In response to a user request, one of these images is displayed.

The body information of Fig. 10B includes information about each part of the exterior system unit. "COVER FRONT" and "COVER RIGHT" are shown as examples of the parts. The body information of Fig. 10B specifies entire images of the exterior system unit with the cover-front part of the part number "B2380010" being highlighted as three file names B2380010_A1, B2380010_A2, and B2380010_A3 corresponding to the three respective view angles, for example. Images of these three image files are shown in Figs. 11J through 11L. The entire images of the exterior system unit with the cover-front part being highlighted viewed from three different view angles as shown in Figs. 11J through 11L are prepared in advance as image data. In response to a user request, one of these images is displayed.

As described above, the parts management information units 101 are related to each other to form a hierarchical structure, which makes it possible to manage a product as a whole, a plurality of units constituting the product, and a plurality of parts constituting each unit in an organized manner. For example, one of the units included in a product may be selected, and one of the parts included in the selected unit may be further selected, thereby achieving a hierarchical selection process. In the following, a detailed description will be given of such a hierarchical selection process by using an example of graphical user interface.

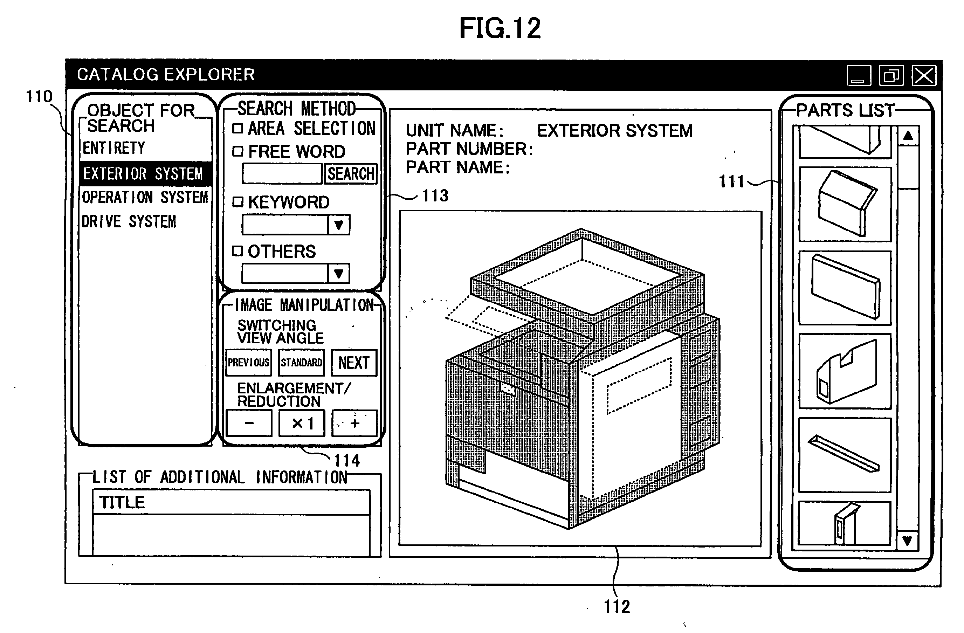

Fig. 12 is a drawing showing an example of the graphical user interface of the parts selecting apparatus according to the present invention. Fig. 12 is a drawing showing an example of a window displayed on the display apparatus 4 of the parts selecting apparatus according to the present invention.

In Fig. 12, a search object display field 110 of the GUI (graphical user interface) window shows a list of parts names (unit names) specified in the header information 102 and the body information 103 of the parts management information unit 101. In this example, the parts names or the like specified in the header information 102 and the body information 103 shown in Figs. 9A and 9b are listed.

As one of the units is tentatively selected in this search object display field 110, an entire image of the product with this unit being highlighted is displayed in an image display area 112. Namely, the selected unit is highlighted in a specific display color or the like while other units are displayed with translucent appearance. If the exterior system unit is tentatively selected, for example, one of the images shown in Figs. 11D through 11F is displayed in the image display area 112.

As the selection of one of the units is finalized in the search object display field 110, a standalone image of this unit is displayed in the image display area 112. In so doing, the standalone image of the selected unit may be displayed as an expanded image according to need if the size of the unit is small. If the selection of the exterior system unit is finalized, for example, one of the images shown in Figs. 11G through 11I is displayed in the image display area 112. It should be noted that a tentative selection in the search object display field 110 may be indicated by a single click of a mouse button, and a finalized selection may be indicated by a double click of the mouse button.

A parts-list display field 111 displays standalone images of parts specified in the body information 103 of the parts management information unit 101 for which the selection is finalized, i.e., displays the images specified by the standalone image file names listed in the body information 103. If the number of the parts is so large that all the parts cannot be displayed simultaneously, a scroll bar as shown in the parts-list display field 111 of Fig. 12 is presented. The operation of the scroll bar makes it possible to display parts that are not currently displayed.

As one of the parts is tentatively selected in the parts-list display field 111, a standalone image of the selected unit with this part being highlighted is displayed in the image display area 112. Namely, the selected part is highlighted in a specific display color or the like while other units are displayed with translucent appearance. If the cover-front part is tentatively selected, for example, one of the images shown in Figs. 11J through 11L is displayed in the image display area 112.

As the selection of one of the parts is finalized in the parts-list display field 111, a standalone image of this part is displayed in the image display area 112. As the selection of the cover-front part is finalized, for example, a standalone image of the cover-front part is displayed in the image display area 112. It should be noted that a tentative selection in the parts-list display field 111 may be indicated by a single click of a mouse button, and a finalized selection may be indicated by a double click of the mouse button.

With the unit or part being displayed in the image display area 112, a button operation on an image operation panel 114 causes the view angle or enlargement/reduction rate (magnification) of the displayed image to be changed. Namely, a click on the "PREVIOUS" button or "NEXT" button on the image operation panel 114 causes an image immediately preceding the currently displayed image or an image immediately following the currently displayed image to be displayed in an image sequence in which a plurality of images viewed from different view angles are sequentially arranged according to the angle. Further, a "STANDARD" button may be clicked to display an image taken from a standard view angle that is defined as a default angle. Moreover, a "-" button may be clicked to reduce the size of the image by one step, or a "+" button may be clicked to enlarge the size of the image by one step. Further, a "x 1" button may be clicked to display an image having a standard magnification that is defined as a default. When an image is to be displayed for the first time in the image display area 112, the image viewed from the standard view angle defined as a default and having the standard magnification defined as a default may be displayed.

Moreover, with the selection of a unit being in a finalized state, a search method field 113 may be used to perform a search of parts in the selected unit by use of various search methods. If an area selection is chosen, the user can specify an area by use of the mouse or cursor keys in the image display area 112. Namely, the position of the pointer shown on the image display area 112 is manipulated by use of the mouse, cursor keys, or the like to specify two points on the image, thereby specifying a closed rectangular area having these two points as diagonally opposite corners. In response, a list of the parts that are included in this closed rectangular area is displayed in the parts-list display field 111.

If the free word is selected, a search based on any desired query word can be performed. Namely, any desired query character string may be entered in the input field, and the "search" button next to the input field may be clicked to display the parts having parts names containing the query character string in the parts-list display field 111.

If the keyword is selected, a search based on one of the predetermined keywords can be performed. Namely, a desired keyword may be selected from a displayed list of the predetermined keywords, resulting in the parts corresponding to the selected keyword being displayed in the parts-list display field 111.

As described above, the data structure as previously described is used for data management, and the graphical user interface as described above is used for data manipulation, thereby achieving a hierarchical selection process such as selecting one of the units included in a product and further selecting one of the parts included in the selected unit. Further, when a part is to be selected from a unit, a search may be performed for the parts contained in a two-dimensional area specified on a two-dimensional displayed image, or may be performed for parts by use of keywords or free words. Moreover, the switching of image view angles and/or the switching of image enlargement/reduction rates (magnifications) can be easily performed with respect to the displayed image.

The present invention is not limited to the embodiments described above. Each of the functions constituting the parts selecting apparatus or parts catalog viewing system according to the above embodiments may be implemented as a program, which is stored in a recording medium in advance. Such programs stored in this recording medium may be loaded to the memory or storage device of a computer for execution, thereby achieving the operations of the present invention. In this case, the programs retrieved from the recording medium serve to achieve the functions as described in the above embodiments, so that the programs per se and the recording medium having the programs recorded therein also constitute part of the present invention.

The programs as described above may perform various processes in cooperation with the operating system or other application programs that operate in response to instruction from these programs, thereby achieving the functions described in the above embodiments.

The programs for achieving the functions described in the above embodiments may be provided via a recording medium which is a disk (e.g., magnetic disk, optical disk, or the like), a card (e.g., memory card, optical card, or the like), a semiconductor memory device (e.g., ROM, nonvolatile memory, or the like), a tape (e.g., magnetic tape, cassette tape, or the like), or the like. Alternatively, the programs may be supplied via a network from a server computer where these programs are stored in a storage device. In this case, the storage device of this server computer is also a recording medium as defined in the present invention.

In this manner, the functions of the above embodiments may be distributed as programs, thereby achieving cost reduction, portability, and universal applicability.

Further, the present invention is not limited to these embodiments, but various variations and modifications may be made without departing from the scope of the present invention.

The present invention may be used in the repair and maintenance of machinery and other technical apparatus as well as the operation of a warehouse or other storage facility. In particular the invention may be integrated into maintenance software and/or automated storage and retrieval systems, for example to control a robotic parts picker.

## Claims

1. A parts selecting apparatus, comprising:
a display screen (4) that displays a two-dimensional image of a three-dimensional mechanical product assembled from a plurality of parts as viewed from a predetermined view angle, in a first window (W1);
an inclusion/non-inclusion determining unit (22) configured to extract parts included in a two-dimensional closed area in response to a user action specifying the two-dimensional closed area in the first window to narrow down candidate parts for selection and to cause information identifying the extracted parts to be displayed in a second window (W2) of the display screen;
a parts selecting unit (23) configured to receive a user action selecting a part from the extracted parts identified by information displayed by the inclusion/non-inclusion determining unit and, in response thereto to cause a two-dimensional image of the three-dimensional product with the selected part being highlighted to be displayed on the display screen (4) ; and
an image switching unit (24) configured, in response to a view angle and/or magnification switching request made by the user, to switch the two-dimensional image of the three-dimensional product with the selected part being highlighted, displayed on the display screen, to another two-dimensional image for which at least one of a view angle or a magnification is changed; **characterised in that**
the predetermined view angle is selectable by the user; and by
a storage unit (25) configured to store a plurality of two-dimensional images, as images prepared in advance, of the three-dimensional product as viewed from different view angles, wherein one of the two-dimensional images corresponding to the predetermined view angle selected by the user is retrieved from the storage unit for display on the display screen (4).

2. A parts selecting apparatus as claimed in claim 1, further comprising a storage unit (25) configured to store data identifying a two-dimensional occupation area occupied by a given part in the two-dimensional image of the three dimensional product as viewed from the predetermined view angle such that the data is stored separately for each of the parts constituting the three-dimensional products, wherein the inclusion/non-inclusion determining unit (22) is configured to compare the data identifying the two-dimensional occupation area stored in the storage unit with the two-dimensional closed area specified by the user in order to extract the parts included in the two-dimensional closed area from the plurality of parts constituting the three dimensional product.

3. A parts selecting apparatus as claimed in claim 1 or 2, wherein the information identifying the extracted parts is images or names of the extracted parts.

4. A parts selecting apparatus as claimed in any one of claims 1 to 3, further comprising a storage unit (25) configured to store a two-dimensional image, as two-dimensional data prepared in advance, of the three-dimensional product with a part being highlighted with respect to each of the parts constituting the three-dimensional object, wherein the parts selecting unit (23) refers to the two-dimensional data stored in the storage unit so as to display the two-dimensional image of the three-dimensional product with the selected part being highlighted on the display screen.

5. A parts selecting apparatus as claimed in any one of the preceding claims, further comprising a storage unit (25) configured to store a two-dimensional image, as two-dimensional data prepared in advance for each of a plurality of view angles, of the three-dimensional product with a part being highlighted with respect to each of the parts constituting the three-dimensional object, wherein the image switching unit (24) refers to the two-dimensional data stored in the storage unit so as to switch the two-dimensional image of the three-dimensional product with the selected part being highlighted, displayed on the display screen, to another two-dimensional image viewed from a different view angle.

6. A parts selecting apparatus as claimed in any one of the preceding claims, further comprising a storage unit (25) configured to store a two-dimensional image, as two-dimensional data prepared in advance for each of a plurality of magnifications, of the three-dimensional product with a part being highlighted with respect to each of the parts constituting the three-dimensional product, wherein the image switching unit (24) refers to the two-dimensional data stored in the storage unit so as to switch the two-dimensional image of the three-dimensional product with the selected part being highlighted, displayed on the display screen, to another two-dimensional image viewed at a different magnification.

7. A method of selecting a part, comprising:
displaying a two-dimensional image of a three-dimensional mechanical product assembled from a plurality of parts as viewed from a predetermined view angle in a first window (W1) on a display screen (4);
extracting parts of the three-dimensional product included in a two-dimensional closed area in response to a user action specifying the two-dimensional closed area in the first window on the display screen to narrow down candidate parts for selection;
displaying information identifying the extracted parts in a second window (W2) on the display screen;
causing a two-dimensional image of the three-dimensional product with a selected part being highlighted to be displayed on the display screen in response to a user action selecting the selected part from the parts displayed on the display screen; and
switching the two-dimensional image of the three-dimensional product with the selected part being highlighted, displayed on the display screen, to another two-dimensional image for which at least one of a view angle or a magnification is changed in response to a view angle and/or magnification switching request made by the user; **characterised by**:
storing a plurality of two-dimensional images of the three-dimensional product as viewed from different view angles, the plurality of two-dimensional images being prepared in advance;
receiving a selection of a predetermined view angle from the user; and
retrieving one of the two-dimensional images corresponding to the selected predetermined view angle.

8. The method as claimed in claim 7, further comprising:
displaying a two-dimensional image of the three-dimensional product as viewed from a given view angle on the display screen; and
displaying a two-dimensional image of a selected part in place of the two-dimensional image of the three-dimensional product on the display screen in response to a user action selecting the selected part from the plurality of parts on the display screen.

9. A computer program comprising program code means that, when executed by a computer system, instructs the computer system to perform a method according to claim 7 or 8.

## Patentansprüche

1. Teileauswahlvorrichtung, die umfasst:
einen Anzeigeschirm (4), der ein zweidimensionales Bild eines dreidimensionalen mechanischen Produkts, das aus mehreren Teilen zusammengefügt ist, bei Betrachtung unter einem vorgegebenen Betrachtungswinkel in einem ersten Fenster (W1) anzeigt;
eine Einschluss-/Nichteinschluss-Bestimmungseinheit (22), die konfiguriert ist, um in einem zweidimensionalen geschlossenen Bereich enthaltene Teile in Reaktion auf einen Anwendereingriff, der den zweidimensionalen geschlossenen Bereich in dem ersten Fenster spezifiziert, zu extrahieren, um die Anzahl von Kandidatenteilen für die Auswahl zu reduzieren und um zu veranlassen, dass Informationen, die die extrahierten Teile identifizieren, in einem zweiten Fenster (W2) des Anzeigeschirms angezeigt werden;
eine Teileauswahleinheit (23), die konfiguriert ist, um einen Anwendereingriff zu empfangen, der ein Teil aus den extrahierten Teilen auswählt, die durch Informationen identifiziert werden, die durch die Einschluss-/Nichteinschluss-Bestimmungseinheit angezeigt werden, und um in Reaktion darauf zu veranlassen, dass ein zweidimensionales Bild des dreidimensionalen Produkts mit dem hervorgehobenen ausgewählten Teil auf dem Anzeigeschirm (4) angezeigt wird; und
eine Bildumschalteinheit (24), die konfiguriert ist, um in Reaktion auf einen Betrachtungswinkel und/oder eine von einem Anwender erzeugte Vergrößerungsumschaltanforderung das zweidimensionale Bild des dreidimensionalen Produkts mit dem hervorgehobenen ausgewählten Teil, das auf dem Anzeigeschirm angezeigt wird, zu einem weiteren zweidimensionalen Bild umzuschalten, bei dem ein Betrachtungswinkel und/oder eine Vergrößerung geändert sind; **dadurch gekennzeichnet, dass**
der vorgegebene Betrachtungswinkel durch den Anwender wählbar ist; und
eine Speichereinheit (25) vorgesehen ist, die konfiguriert ist, um mehrere zweidimensionale Bilder als im Voraus vorbereitete Bilder des dreidimensionalen Produkts bei Betrachtung unter verschiedenen Betrachtungswinkel zu speichern, wobei eines der zweidimensionalen Bilder, das dem durch den Anwender gewählten vorgegebenen Betrachtungswinkel entspricht, aus der Speichereinheit wiedergewonnen wird, um auf dem Anzeigeschirm (4) angezeigt zu werden.

2. Teilauswahlvorrichtung nach Anspruch 1, die ferner eine Speichereinheit (25) umfasst, die konfiguriert ist, um Daten zu speichern, die einen zweidimensionalen Belegungsbereich identifizieren, der durch ein gegebenes Teil in dem zweidimensionalen Bild des dreidimensionalen Produkts bei Betrachtung unter dem vorgegebenen Betrachtungswinkel belegt ist, so dass die Daten für jedes der Teile, die die dreidimensionalen Produkte bilden, getrennt gespeichert werden, wobei die Einschluss-/Nichteinschluss-Bestimmungseinheit (22) konfiguriert ist, um die Daten, die den zweidimensionalen Belegungsbereich identifizieren und in der Speichereinheit gespeichert sind, mit dem zweidimensionalen geschlossenen Bereich, der durch den Anwender spezifiziert wird, zu vergleichen, um die Teile, die in dem zweidimensionalen geschlossenen Bereich enthalten sind, aus den mehreren Teilen, die das dreidimensionale Produkt bilden, zu extrahieren.

3. Teileauswahlvorrichtung nach Anspruch 1 oder 2, wobei die Informationen, die die extrahierten Teile identifizieren, Bilder oder Namen der extrahierten Teile sind.

4. Teilauswahlvorrichtung nach einem der Ansprüche 1 bis 3, die ferner eine Speichereinheit (25) umfasst, die konfiguriert ist, um ein zweidimensionales Bild als im Voraus vorbereitete zweidimensionale Daten des dreidimensionalen Produkts zu speichern, wobei ein Teil in Bezug auf sämtliche Teile, die das dreidimensionale Objekt bilden, hervorgehoben ist, wobei die Teileauswahleinheit (23) auf die in der Speichereinheit gespeicherten zweidimensionalen Daten Bezug nimmt, um das zweidimensionale Bild des dreidimensionalen Produkts mit dem ausgewählten hervorgehobenen Teil auf dem Anzeigeschirm anzuzeigen.

5. Teileauswahlvorrichtung nach einem der vorhergehenden Ansprüche, die ferner eine Speichereinheit (25) umfasst, die konfiguriert ist, um ein zweidimensionales Bild als im Voraus vorbereitete zweidimensionale Daten für jeden von mehreren Betrachtungswinkeln des dreidimensionalen Produkts zu speichern, wobei ein Teil in Bezug auf sämtliche Teile, die das dreidimensionale Objekt bilden, hervorgehoben ist, wobei die Bildumschalteinheit (24) auf die in der Speichereinheit gespeicherten zweidimensionalen Daten Bezug nimmt, um das zweidimensionale Bild des dreidimensionalen Produkts mit dem hervorgehobenen Teil, das auf dem Anzeigeschirm angezeigt wird, zu einem weiteren zweidimensionalen Bild, das unter einem anderen Betrachtungswinkel betrachtet wird, umzuschalten.

6. Teileauswahlvorrichtung nach einem der vorhergehenden Ansprüche, die ferner eine Speichereinheit (25) umfasst, die konfiguriert ist, um ein zweidimensionales Bild als im Voraus für jede von mehreren Vergrößerungen vorbereitete zweidimensionale Daten des dreidimensionalen Produkts zu speichern, wobei ein Teil in Bezug auf sämtliche Teile, die das dreidimensionale Produkt bilden, hervorgehoben ist, wobei die Bildumschalteinheit (24) auf die in der Speichereinheit gespeicherten zweidimensionalen Daten Bezug nimmt, um das zweidimensionale Bild des dreidimensionalen Produkts mit dem hervorgehobenen Teil, das auf dem Anzeigeschirm angezeigt wird, zu einem weiteren zweidimensionalen Bild, das mit einer anderen Vergrößerung betrachtet wird, umzuschalten.

7. Verfahren zum Auswählen eines Teils, das umfasst:
Anzeigen eines zweidimensionalen Bildes eines dreidimensionalen mechanischen Produkts, das aus mehreren Teilen zusammengefügt ist, bei Betrachtung unter einem vorgegebenen Betrachtungswinkel in einem ersten Fenster (W1) auf einem Anzeigeschirm (4);
Extrahieren von Teilen des dreidimensionalen Produkts, die in einem zweidimensionalen geschlossenen Bereich enthalten sind, in Reaktion auf einen Anwendereingriff, der den zweidimensionalen geschlossenen Bereich in dem ersten Fenster auf dem Anzeigeschirm spezifiziert, um die Anzahl von Kandidatenteilen für die Auswahl zu reduzieren;
Anzeigen von Informationen, die die extrahierten Teile identifizieren, in einem zweiten Fenster (W2) auf dem Anzeigeschirm;
Veranlassen, dass ein zweidimensionales Bild des dreidimensionalen Produkts, in dem ein ausgewähltes Teil hervorgehoben ist, auf dem Anzeigeschirm in Reaktion auf einen Anwendereingriff, der das ausgewählte Teil aus den auf dem Anzeigeschirm angezeigten Teilen auswählt, angezeigt wird; und
Umschalten des zweidimensionalen Bildes des dreidimensionalen Produkts, in dem das ausgewählte Teil hervorgehoben ist und das auf dem Anzeigeschirm angezeigt wird, zu einem weiteren zweidimensionalen Bild, in dem ein Betrachtungswinkel und/oder eine Vergrößerung geändert sind, in Reaktion auf eine Betrachtungswinkel- und/oder Vergrößerungsumschaltanforderung, die von einem Anwender vorgenommen wird; **gekennzeichnet durch**:
Speichern mehrerer zweidimensionaler Bilder des dreidimensionalen Produkts bei Betrachtung unter verschiedenen Betrachtungswinkeln, wobei die mehreren zweidimensionalen Bilder im Voraus vorbereitet werden;
Empfangen einer Auswahl eines vorgegebenen Betrachtungswinkels vom Anwender; und
Wiedergewinnen eines der zweidimensionalen Bilder, das dem ausgewählten vorgegebenen Betrachtungswinkel entspricht.

8. Verfahren nach Anspruch 7, das ferner umfasst:
Anzeigen eines zweidimensionalen Bildes des dreidimensionalen Produkts bei Betrachtung unter einem gegebenen Betrachtungswinkel auf dem Anzeigeschirm; und
Anzeigen eines zweidimensionalen Bildes eines ausgewählten Teils statt des zweidimensionalen Bildes des dreidimensionalen Produkts auf dem Anzeigeschirm in Reaktion auf einen Anwendereingriff, der das ausgewählte Teil aus den mehreren Teilen auf dem Anzeigeschirm auswählt.

9. Computerprogramm, das Programmcodemittel enthält, die dann, wenn sie durch ein Computersystem ausgeführt werden, das Computersystem anweisen, ein Verfahren nach Anspruch 7 oder 8 auszuführen.

## Revendications

1. Dispositif de sélection de parties comprenant :
un écran d'affichage (4) affichant une image bidimensionnelle d'un produit mécanique tridimensionnel assemblé à partir d'une pluralité de parties, vue d'un angle de vue prédéterminée, dans une première fenêtre (W1) ;
une unité de détermination d'inclusion/d'absence d'inclusion (22) configurée pour extraire des parties incluses dans une zone bidimensionnelle fermée en réponse à une action de l'utilisateur spécifiant la zone bidimensionnelle fermée dans la première fenêtre pour restreindre les parties candidates pour la sélection et pour provoquer l'affichage d'informations identifiant les parties extraites dans une deuxième fenêtre (W2) de l'écran d'affichage ;
une unité de sélection de partie (23) configuré pour recevoir une action de l'utilisateur sélectionnant une partie des parties extraites identifiée par des informations affichées par l'unité de détermination d'inclusion/d'absence d'inclusion et, en réponse à celle-ci, pour provoquer l'affichage sur l'écran d'affichage (4) d'une image bidimensionnelle du produit tridimensionnel, la partie sélectionnée étant mise en surbrillance ; et
une unité de commutation d'image (24) configurée, en réponse à une demande de commutation d'angle de vue et/ou d'agrandissement effectuée par l'utilisateur, pour commuter l'image bidimensionnelle du produit tridimensionnel, la partie sélectionnée étant mise en surbrillance, affichée sur l'écran d'affichage, en une autre image bidimensionnelle pour laquelle au moins l'angle de vue ou l'agrandissement est modifié ; **caractérisé en ce que**
l'angle de vue prédéterminé peut être sélectionné par l'utilisateur ; et **en ce que**
une unité de mémorisation (25) configurée pour mémoriser une pluralité d'images bidimensionnelles sous forme d'images préparées à l'avance du produit tridimensionnel, vues de différents angles de vue, dans lequel l'une des images bidimensionnelles correspondant à l'angle de vue prédéterminé sélectionné par l'utilisateur est récupérée dans l'unité de mémorisation pour être affichée sur l'écran d'affichage (4).

2. Dispositif de sélection de parties selon la revendication 1, comprenant en outre une unité de mémorisation (25) configurée pour mémoriser des données identifiant une zone d'occupation bidimensionnelle occupée par une partie donnée de l'image bidimensionnelle du produit tridimensionnel, vue de l'angle de vue prédéterminée de façon que les données soient mémorisées séparément pour chacune des parties constituant les produits tridimensionnels, dans lequel l'unité de détermination d'inclusion/absence d'inclusion (22) est configurée pour comparer les données identifiant la zone d'occupation bidimensionnelle mémorisée dans l'unité de mémorisation avec la zone bidimensionnelle fermée spécifiée par l'utilisateur pour extraire les parties incluses dans la zone bidimensionnelle fermée de la pluralité de parties constituant le produit tridimensionnel.

3. Dispositif de sélection de parties selon la revendication 1 ou 2, dans lequel les informations identifiant les parties extraites sont des images ou les noms des parties extraites.

4. Dispositif de sélection de parties selon l'une quelconque des revendications 1 à 3, comprenant en outre une unité de mémorisation (25) configurée pour mémoriser une image bidimensionnelle sous forme de données bidimensionnelles préparées à l'avance du produit tridimensionnel, une partie étant mise en surbrillance par rapport à chacune des parties constituant l'objet tridimensionnel, dans lequel l'unité de sélection de partie (23) se réfère aux données bidimensionnelles mémorisées dans l'unité de mémorisation de façon à afficher l'image bidimensionnelle du produit tridimensionnel, la partie sélectionnée étant mise en surbrillance sur l'écran d'affichage.

5. Dispositif de sélection de parties selon l'une quelconque des revendications précédentes, comprenant en outre une unité de mémorisation (25) configurée pour mémoriser une image bidimensionnelle sous forme de données bidimensionnelles préparées à l'avance pour chaque angle d'une pluralité d'angles de vue du produit tridimensionnel, une partie étant mise en surbrillance par rapport à chacune des parties constituant l'objet tridimensionnel, dans lequel l'unité de commutation d'image (24) se réfère aux données bidimensionnelles mémorisées dans l'unité de mémorisation de façon à commuter l'image bidimensionnelle du produit tridimensionnel, la partie sélectionnée affichée sur l'écran d'affichage étant mise en surbrillance, en une autre image bidimensionnelle vue d'un angle de vue différent.

6. Dispositif de sélection de parties selon l'une quelconque des revendications précédentes, comprenant en outre une unité de mémorisation (25) configurée pour mémoriser une image bidimensionnelle, sous forme de données bidimensionnelles préparées à l'avance pour chaque agrandissement d'une pluralité d'agrandissements du produit tridimensionnel, une partie étant mise en surbrillance par rapport à chacune des parties constituant le produit tridimensionnel, dans lequel l'unité de commutation d'image (24) se réfère aux données bidimensionnelles mémorisées dans l'unité de mémorisation de façon à commuter l'image bidimensionnelle du produit tridimensionnel, la partie sélectionnée étant mise en surbrillance, affichée sur l'écran d'affichage, en une autre image bidimensionnelle vue avec un agrandissement différent.

7. Procédé de sélection d'une partie, comprenant :
l'affichage d'une image bidimensionnelle d'un produit mécanique tridimensionnel assemblé à partir d'une pluralité de parties, vue d'un angle de vue prédéterminé dans une première fenêtre (W1) sur un écran d'affichage (4) ;
l'extraction de parties du produit tridimensionnel incluses dans une zone bidimensionnelle fermée en réponse à une action de l'utilisateur spécifiant la zone bidimensionnelle fermée dans la première fenêtre sur l'écran d'affichage pour restreindre les parties candidates pour la sélection ;
l'affichage d'informations identifiant les parties extraites dans une deuxième fenêtre (W2) sur l'écran d'affichage ;
l'affichage sur l'écran d'affichage d'une image bidimensionnelle du produit tridimensionnel, une partie sélectionnée étant mise en surbrillance, en réponse à une action de l'utilisateur sélectionnant la partie sélectionnée à partir des parties affichées sur l'écran d'affichage ; et
la commutation de l'image bidimensionnelle du produit tridimensionnel, la partie sélectionnée étant mise en surbrillance, affichée sur l'écran d'affichage, en une autre image bidimensionnelle pour laquelle au moins l'angle de vue ou l'agrandissement est modifié en réponse à une demande de commutation d'angle de vue et/ou d'agrandissement effectuée par l'utilisateur ; **caractérisée par** :
la mémorisation d'une pluralité d'images bidimensionnelles du produit tridimensionnel, vues de différents angles de vue, la pluralité d'images bidimensionnelles étant préparée à l'avance ;
la réception d'une sélection de l'utilisateur d'un angle de vue prédéterminé ; et
la récupération de l'une des images bidimensionnelles correspondant à l'angle de vue prédéterminé sélectionné.

8. Procédé selon la revendication 7, comprenant en outre :
l'affichage d'une image bidimensionnelle du produit tridimensionnel, vue d'un angle de vue donné sur l'écran d'affichage ; et
l'affichage d'une image bidimensionnelle d'une partie sélectionnée à la place de l'image bidimensionnelle du produit tridimensionnel sur l'écran d'affichage en réponse à une action de l'utilisateur sélectionnant la partie sélectionnée à partir de la pluralité de parties sur l'écran d'affichage.

9. Programme informatique comprenant un moyen de code de programme qui, lorsqu'il est exécuté par un système informatique, demande au système informatique d'exécuter un procédé selon la revendication 7 ou 8.
